# EUROPEAN PATENT SPECIFICATION

(11) **EP 4 520 956 B1**
(45) Date of publication and mention of the grant of the patent: **01.04.2026**
(21) Application number: 23196596.3
(22) Date of filing: 11.09.2023
(51) Int. Cl.: F03D 3/02, F03D 3/06

(54) **ROTOR FOR A WIND TURBINE SUCH AS A VERTICAL-AXIS WIND TURBINE, E.G. A SAVONIUS TYPE WIND TURBINE**
ROTOR FÜR EINE WINDTURBINE WIE EINE WINDTURBINE MIT VERTIKALER ACHSE, Z. B. EINE WINDTURBINE VOM SAVONIUS-TYP
ROTOR POUR UNE ÉOLIENNE TELLE QU'UNE ÉOLIENNE À AXE VERTICAL, PAR EXEMPLE UNE ÉOLIENNE DE TYPE SAVONIUS

(43) Date of publication of application: 12.03.2025
(73) Proprietor: Philéole, 1330 Rixensart (BE)
(72) Inventor: BODART, Luc, 1330 Rixensart (BE)
(74) Representative: Calysta NV

(56) References cited:
- WO-A2-2012/082953
- US-A1- 2007 098 558
- US-A1- 2012 235 418
- US-A1- 2022 042 488

## Description

The present invention relates to the field of renewable energy, in particular wind energy. The present invention relates in particular to improvements to a rotor for e.g. vertical-axis wind turbines, such as a Savonius type wind turbine.

It is well established that there is a need for renewable energy, e.g. in view of global warming. One of the sources of renewable energy can be wind energy. Wind turbines with a horizontal rotation axis are already being installed on many locations, but these have the disadvantages of being very large. They cannot be installed everywhere, and are sometimes protested for being visually unattractive. In addition, these wind turbines also generate noise pollution.

Vertical-axis wind turbines overcome the disadvantages of being large and making too much noise. However, known vertical-axis wind turbines suffer from lower efficiency than horizontal-axis wind turbines. Due to the lower efficiency, the vertical-axis wind turbines are not commercially viable for most applications. They are, therefore, not used very often yet.

US2022/0042488 discloses a wind turbine rotor including an axle, a plurality of primary blades disposed at regular intervals around the axle, and a plurality of secondary blades disposed around the axle between primary blades of the plurality of primary blades. Each secondary blade of the plurality of secondary blades is smaller than each primary blade of the plurality of primary blades. WO2012/082953 is another prior art example of a wind turbine rotor.

It is an object of the invention to overcome the disadvantages of the prior art, or at least provide an alternative to the prior art. It is in particular an object of the invention to increase the efficiency of (vertical-axis) wind turbines.

This object is achieved with a rotor for a wind turbine such as a vertical-axis wind turbine, according to claim 1, e.g. a Savonius type wind turbine, comprising:
- a central shaft defining a rotation axis;
- a plurality of main blades structurally connected to the central shaft, wherein each blade extends in a direction radially outward from the central shaft with a curved shape comprising a main blade inner wall and a main blade outer wall:
- a plurality of secondary blades, wherein each secondary blade
   - extends in radial direction of the rotor with a curved shape comprising:
      - a secondary blade inner wall, and
      - a secondary blade outer wall opposite of the secondary blade inner wall;
   - is associated with an associated main blade of the plurality of main blades, wherein the secondary blade is arranged facing the associated main blade, thereby defining a wind flow path between the secondary blade and the associated main blade, the wind flow path having:
   - an outer flow path end between a radial outer end of the secondary blade and a radial outer end of the associated main blade;
   - an inner flow path end between
      a. a radial inner end of the secondary blade and
      b. the main blade inner wall or the main blade outer wall of the associate main blade.

Optionally, the secondary blade is arranged with its secondary blade outer wall facing the main blade inner wall of the associated main blade, thereby defining the wind flow path between said secondary blade outer wall and main blade inner wall, wherein the inner flow path end of the wind flow path is arranged between the radial inner end of the secondary blade and the main blade inner wall of the associate main blade. Thus, in embodiments, the rotor can be described as: a rotor for a wind turbine such as a vertical-axis wind turbine, e.g. a Savonius type wind turbine, comprising:
- a central shaft defining a rotation axis;
- a plurality of main blades structurally connected to the central shaft, wherein each blade extends in a direction radially outward from the central shaft with a curved shape comprising a main blade inner wall;
- a plurality of secondary blades, wherein each secondary blade
   - extends in radially direction of the rotor with a curved shape comprising:
      - a secondary blade inner wall, and
      - a secondary blade outer wall opposite of the secondary blade inner wall;
   - is associated with an associated main blade of the plurality of main blades, wherein the secondary blade is arranged with its secondary blade outer wall facing the main blade inner wall of the associated main blade, thereby defining a wind flow path having between said secondary blade outer wall and main blade inner wall, the wind flow path having:
      - an outer flow path end between a radial outer end of the secondary blade and a radial outer end of the associated main blade;
      - an inner flow path end between a radial inner end of the secondary blade and the main blade inner wall of the associate main blade.

The invention thus relates, in embodiments, to a rotor. The rotor can be used for a wind turbine, e.g. with the rotation axis substantially perpendicular to the air flow entering the rotor. The rotor can e.g. be used for a vertical-axis wind turbine. A vertical-axis wind turbine generally is a turbine with a rotor configured to rotate around a vertical rotation axis. It will be understood, however, that during use in some cases (or some situations), the rotation axis might deviate slightly from being arranged vertically. This can e.g. be dependent on manufacturing or installations tolerances, or be caused by the structure on which the wind turbine is installed. In addition, in some application of the wind turbine (such as when being installed on a (sailing) boat), the rotation axis of the wind turbine might move during use. The wind turbine can e.g. be a Savonius type wind turbine.

The rotor comprises a central shaft. The central shaft can e.g. have a circular cross-section. The central shaft can e.g. be tubular. The central shaft can e.g. be arranged at a centre of the rotor. The longitudinal (centre) axis of the central shaft can e.g. coincide with a (longitudinal) centre axis of the rotor. The central shaft defines a rotation axis. The rotation axis may e.g. coincide with the longitudinal (centre) axis of the central shaft and/or with the (longitudinal) centre axis of the rotor. The rotor is configured to rotated around the rotation axis. For example, the central shaft (and components structurally connected to the central shaft) is configured to rotate around the rotation axis.

Within this text, generally three types of direction will be referred to. A longitudinal direction is a direction parallel to the longitudinal (centre) axis of the central shaft. This will generally also be parallel to the longitudinal centre axis of the rotor. For the vertical-axis wind turbine, the longitudinal direction will usually be a vertical direction during use. A radial direction is a direction parallel to a radial direction of the central shaft. A circumferential direction is a direction parallel to a circumference of a circle having a longitudinal direction as centre axis. For the vertical-axis wind turbine, the radial and circumferential direction will usually be horizontal directions during use.

The rotor comprises a plurality of main blades. The plurality of main blades may e.g. consist of two main blades, three main blades, or four main blades. The main blades may e.g. be arranged equidistantly in circumferential direction, i.e. two subsequent main blades being arranged at equal circumferential distance to each other.

The main blades are structurally connected to the central shaft. The structural connection is a direct connection. Thus, movement of the main blades will cause the central shaft to move. In particular, when the main blades are moved by wind, the blades are configured to cause rotation of the central shaft. This will thus also cause the main blades to rotate. The main blades and the central shaft move in unison. It will be understood, however, that small movement of the main blades relative to the central shaft may be possible due to flexibility of the main blade and/or the components connecting the main blade to the central shaft.

Optionally, the main blades are directly connected to the central shaft to accomplish the structural connection. For example, a radial inner end of the main blade is directly connected to the central shaft. The main blades may e.g. extend from the central shaft. The main blades can e.g. be attached to the central shaft, or the main blades can be produced uniformly with the central shaft and protrude from the central shaft.

The main blades extend in a direction radially outward from the central shaft. The main blades have a curved shape (when seen in the direction radially outward from the central shaft). Optionally, the curved shape is defined by a curve with a constant radius of curvature. The curved shape defines a main blade inner wall, which is the side of the main blade at the inside of the curve. Opposite of the main blade inner wall, the main blade may have a main blade outer wall (on the outside of the curve). The main blade inner wall and main blade outer wall are separated from each other by the main blade thickness. The main blade inner wall (and the main blade outer wall) is arranged in a curved plane which extends in longitudinal direction and in a curved manner in radial direction.

The rotor further comprises a plurality of secondary blades. The secondary blades are different from the main blades. The secondary blades extend in a radial direction. The secondary blades have a curved shape. The curved shape defines a secondary blade inner wall, which is the wall of the secondary blade at the inside of the curve. Opposite of the secondary blade inner wall, each secondary blade has a secondary blade outer wall (on the outside of the curve). Optionally, the curved shape is defined by a curve with a constant radius of curvature. The secondary blade inner wall and secondary blade outer wall are separated from each other by the secondary blade thickness. The secondary blade inner wall (and the secondary blade outer wall) is arranged in a curved plane which extends in longitudinal direction and in a curved manner in radial direction.

This, within this text, an inner side and an outer side for the main blades and the secondary sides is defined based the curved shape. The inners side as defined by the curved shape may also be considered a convex side, and the outer side as defined by the curved shape may also be considered a concave side.

The secondary blades are spaced from the central shaft. Thus, the secondary blade does not extend from the central shaft. A radial inner end of the secondary blade is spaced from (i.e. not connected to) the central shaft. The secondary blade is not directly connected to the central shaft. However, the secondary blades may be indirectly connected to the central shaft and/or the main blades (e.g. via an upper and/or lower disk, and/or via auxiliary connectors), such that the secondary blades move in unison with the main blades and the central shaft. Thus, when the main blades and central shaft rotate, the secondary blades also rotate. Again, it will be understood, that small movement of the secondary blades relative to main blades and/or the central shaft may be possible due to flexibility of the secondary blades and/or the components connecting the secondary blades to the main blades and/or the central shaft.

The curved shape of the main blades and secondary blades have the advantageous effect that the force exerted by the wind on the blade depends on which side of the blade the wind impacts. Although the exact direction of the wind may vary, usually a main component of the wind is in a horizontal direction, thus impacting on the curved shape. If the wind impacts on the respective inner wall, the force is larger than when the wind impacts on the outer wall. The inner wall is concave when the wind impacts, while the outer wall is convex when the wind impacts. With a plurality of blades arranged on different orientations relative to the wind, this results in a non-symmetric division of forces, which results in rotation of the rotor around the rotation axis.

Each secondary blade is associated with an associated main blade of the plurality of main blades. Optionally, each main blade is only associated with one of the secondary blades. Thus, optionally, the number of secondary blades in the plurality of secondary blades may be equal to the number of main blades in the plurality of main blades. For each secondary blade, the associated main blade may e.g. be the main blade arranged closest to said secondary blade.

Each secondary blade is arranged facing the associated main blade. For example, the secondary blade may be spaced less than 45 degrees from the main blade when seen in circumferential direction, e.g. less than 25 degrees. For example, the secondary blade may be spaced more than 5 degrees from the main blade when seen in circumferential direction, e.g. more than 10 degrees.

Optionally, the secondary blade is arranged with its secondary blade outer wall facing the main blade inner wall of the associated main blade. Thus, the secondary blade outer wall and the main blade inner wall may be arranged close to each other. When seen in the direction of rotation, the secondary blade is arranged in front its associated main blade. This embodiment is believed to improve the efficiency the rotor the most.

However, it is envisaged that it is also possible that the secondary blade is arranged with its secondary blade inner wall facing the main blade outer wall of the associated main blade. Thus, the secondary blade inner wall and the main blade outer wall may be arranged close to each other. When seen in the direction of rotation, the secondary blade is arranged behind its associated main blade. This embodiment is believed to still improve the efficiency the rotor in comparison with conventional rotors.

A wind flow path can be defined between the secondary blade and its associated main blade. Optionally, the wind flow path is defined between the secondary blade outer wall and the main blade inner wall. Optionally, the wind flow path is defined between the secondary blade inner wall and the main blade outer wall. The wind flow path has an outer flow path end between a radial outer end of the secondary blade and a radial outer end of the associated main blade. The radial outer ends are the respective outer ends most radially outward of the central shaft. The outer flow path end is thus a radial outer flow path end, being the most radially outward end of the wind flow path. The wind flow path further has an inner flow path end between a radial inner end of the secondary blade and the associated main blade, e.g. the main blade inner wall or the main blade outer wall. The inner flow path end is thus a radial inner flow path end, being the most radially inner end of the wind flow path. Optionally, the inner flow path end is arranged radially outward of the central shaft in the direction into which the respective secondary blade and its associated main blade extend.

The rotor having the secondary blades and the wind flow path have the advantage of guiding the wind in a more efficient way. The wind flow is forced between the secondary blade and the associated main blade in the wind flow path. There, the wind flows between the outer flow path end and the inner flow path end. In addition, the secondary blade provides an additional surface for the wind to impact on and thus exert a force onto the rotor. The innovative rotor improves the division of forces exerted by the wind onto the blades, and thus the rotation of the rotor. As such, the efficiency of the rotor is improved.

In the context of this text, when features of a main blade and/or of a secondary blade are described in singular form, it will be understood that each of the main blades and/or secondary blades, respectively, may be embodied in the same way. Thus, even if a feature is described in singular form, when applicable it may be present in the rotor as many times as the plurality of main blades and/or the plurality of secondary blades.

In embodiments, the plurality of main blades consists of two main blades including a first main blade and second main blade. The first and second main blade are offset by 180 degrees of each other in circumferential direction. Optionally, the plurality of secondary blades consists of two secondary blades including a first secondary blade and second secondary blade. Having exactly two main blades (and optionally two secondary blades) results in an efficient wind flow, and hence improves the efficiency.

In embodiments, the curved shape of each main blade comprises a main radius of curvature. The curved shape of each secondary blade comprises a secondary radius of curvature, wherein the secondary radius of curvature is different, preferably smaller, from the main radius of curvature. This has been found advantageous for the wind flow in the wind flow path, but also when entering and exiting the wind flow path. The main radius of curvature can e.g. be 1.5-2.5 times larger than the secondary radius of curvature. For example, the main radius of curvature can be 100-130 mm, and the secondary radius of curvature can be 50-70 mm.

For example, the main radius of curvature may be the radius of curvature of the main blade outer wall. For example, the secondary radius of curvature may be the radius of curvature of the secondary blade outer wall.

The main radius of curvature may e.g. define a main center point of curvature, which a center point of the curved shape of the main blade (e.g. of the main blade outer wall). The secondary radius of curvature may e.g. define a secondary center point of curvature, which a center point of the curved shape of the secondary blade (e.g. of the secondary blade outer wall). Optionally, the main center point of curvature is spaced from the secondary center point of curvature. Thus, the main point of curvature and the secondary center point of curvature do not coincide.

Optionally, the secondary radius of curvature is constant for the secondary blade when seen in radial direction. Optionally, a radius of curvature of the secondary blade inner wall is constant when seen in radial direction and a radius of curvature of the secondary blade outer wall is constant when seen in radial direction. Thus, a secondary blade thickness is constant.

Optionally, the main radius of curvature is constant for the main blade when seen in radial direction. Optionally, a radius of curvature of the main blade outer wall is constant when seen in radial direction. Optionally, a radius of curvature of the main blade inner wall is non-constant when seen in radial direction.

According to the invention, the main blade comprises a radial inner section and a radial outer section. At the radial inner section, the main blade is thicker than at the radial outer section. In particular, the main blade inner wall has radial inner part with an adjusted curvature at the radial inner section. Optionally, the curvature of said radial inner part of the second main blade is the curvature of the main blade outer wall of the first main blade. According to the invention, the curvature of said radial inner part of the first main blade is the curvature of the main blade outer wall of another main blade, e.g. of the second main blade. This has an advantageous effect on the wind flow to improve the efficiency.

In embodiments, a width of the wind flow path is larger at the outer flow path end than at a middle section. The width is measured between the secondary blade and the associated main blade. Optionally, the width of the wind flow path is larger at the outer flow path end than at the inner flow path end. The width can e.g. be between 1.5-2.5 times larger at the outer flow path end than at the inner flow path end.

In embodiments, the main blades extend radially outward from the central shaft. The main blades are (directly) physically connected to the central shaft. The main blades can e.g. be attached to the main shaft. The main blade can e.g. protrude from the main shaft.

Optionally, the secondary blades are spaced from the central shaft. That is, the secondary blades are not directly physically connected to the central shaft. A radial inner end of the secondary blade is spaced from the central shaft. An opening can be defined between the radial inner end of the secondary blade and the central shaft.

In embodiments, the secondary blade has the shape of a partial annulus when seen from radial direction. The partial annulus shape in particular covers a partial annulus angle. The partial annulus angle represents how much of a complete annulus the secondary blade covers. The partial annulus angle is smaller than 360 degrees, e.g. smaller than 180 degrees, e.g. smaller than 150 degrees. The partial annulus angle is e.g. larger than 90 degrees. The partial annulus angle can e.g. be 95-120 degrees.

In embodiments, the main blades are arranged equidistantly when seen in circumferential direction. For example, the rotor may comprise two main blades offset by 180 degrees from each other in circumferential direction. For example, the rotor may comprise three main blades offset by 120 degrees from each other in circumferential direction. For example, the rotor may comprise four main blades offset by 90 degrees from each other in circumferential direction. Optionally, the secondary blades are also arranged equidistantly when seen in circumferential direction.

In embodiments, the rotor comprises a plurality of auxiliary connectors each connecting one of the secondary blades to its associated main blade. The auxiliary connectors may e.g. be a structural reinforcement element, having a first end attached to the secondary blade and a second end attached to the associated main blade. Optionally, an auxiliary connector is provided at the middle of the secondary blade and/or the associated main blade when seen in longitudinal direction. Optionally, two or more auxiliary connectors are provided between a single secondary blade and its associated main blade. Optionally, the auxiliary connector is shorter than the main blade and/or the secondary blade when seen in radial direction.

In embodiments, the rotor comprises an upper disk attached to an upper end of each main blade and an upper end of each secondary blade; and a lower disk attached to a lower end of each main blade and a lower end of each secondary blade. The upper and lower disk provide structural stability. Optionally, a diameter of the upper and/or lower disk is larger than a diameter of a virtual outer end circle on which the radial outer ends of the blades are arranged. This protects the elements of the rotor, such as the blades. When the rotor comprises more than one rotor section (as explained in more detail further below), a single (middle) disk may serve as lower disk for one rotor section and as upper disk for the other rotor section. Optionally, the upper disk and/or the lower disk have a centre point arranged on the rotation axis and/or on the longitudinal axis of the rotor.

In embodiments, each main blade comprises a main blade thickness. Each secondary blade comprises a secondary blade thickness, wherein the secondary blade thickness is different, preferably smaller, from the main blade thickness. Optionally, a main blade thickness is larger than a secondary blade thickness, e.g. 1.4-1.7 times larger. The main blade thickness can e.g. be 5-10 mm. The secondary blade thickness can e.g. be 3-6 mm. Optionally, the main blade thickness is measured at a radial outer section of the main blade. The main blade thickness is measured between the main blade inner wall and the main blade outer wall. The secondary blade thickness is measured between the secondary blade inner wall and the secondary blade outer wall.

In embodiments, radial outer ends of the secondary blades and radial outer ends of the main blades are arranged on a single virtual outer end circle. The virtual outer end circle may have a center point on the rotation axis (or longitudinal center axis of the rotor). This is advantageous for the wind flow into the outer flow path end of the wind flow path, thereby increasing efficiency. Optionally, a diameter of the virtual outer end circle is smaller than a diameter of the upper disk and/or a diameter of the lower disk.

In embodiments, the main blades and the secondary blades have a constant shape when seen in longitudinal direction. For example, the shape does not change over a longitudinal length of the respective blade. For example, the blades are not tilted or twisted when seen in longitudinal direction.

In embodiments, the rotor comprises at least a first rotor section and a second rotor section, being offset from each other (or being distinct sections from each other) when seen in longitudinal direction of the central shaft, wherein the plurality of main blades and the plurality of secondary blades are arranged in the first rotor section, wherein the rotor comprises in the second rotor section: a plurality of second section main blades structurally connected to the central shaft, and a plurality of second section secondary blades, each associated with an associated main blade of the plurality of second section main blades. The second section main blades and the second section secondary blades may be embodied according to any of the embodiments described herein for the main blades and the secondary blades, respectively. The first rotor section and the second rotor section can e.g. be offset from each other by a middle disk, which may e.g. serve as lower disk for the first rotor section and as upper disk for the second rotor section.

In embodiments, the main blades in the first rotor section are offset from the second section main blades when seen in circumferential direction, e.g. offset by 90 degrees.

In embodiments, the rotor comprises a middle disk arranged between the first rotor section and the second rotor section. Optionally, one or more of the main blades, the secondary main blades, the second section main blades, and the second section secondary blades are attached to the middle disk. The middle disk may e.g. serve as upper disk for one of the rotor sections and as lower disk for the other rotor section.

In embodiments, the rotor is manufactured by 3D-printing. In embodiments, the rotor is manufactured by injection moulding.

In embodiments, one or more elements of the rotor, e.g. the central shaft, and/or the main blade, and/or the secondary blades, comprise plastic materials, in particular bioplastic, or a light metal, in particular aluminium or magnesium.

In embodiments, the central shaft is configured to rotate a generator for generating electricity. For example, the central shaft of the rotor may be connected to an output shaft. Rotation of the central shaft will cause the output shaft to rotate. The rotation of the output shaft can force rotation of the generator. Optionally, the output shaft first rotates a gearbox, wherein the gearbox causes rotation of the generator at an increased rpm. This generates electricity. The electricity can e.g. be supplied to a user point, an electricity grid, or a battery. Optionally, the frequency and/or voltage of the electricity is first converted.

In embodiments, the invention relates to a wind turbine comprising at least one rotor according to any of the embodiments described herein.

In embodiments, the invention relates to an energy generation system, comprising a plurality of rotors and/or wind turbines according to any of the embodiments described herein.

In embodiments, the invention relates to a boat, e.g. a sailing boat, comprising at least one rotor and/or at least one wind turbine according to any of the embodiments described herein. The rotor or wind turbine can e.g. be arranged a (sailing) mast.

In embodiments, the invention relates to a building, e.g. a house, an appartement building, an industrial building, an office building, comprising at least one rotor and/or at least one wind turbine according to any of the embodiments described herein, e.g. arranged on the roof.

The invention further relates to a method for for generating electricity. Although the method can be performed with the system according to the invention; neither the system, nor the method is limited thereto. Features explained herein with reference to the system have the same meaning with respect to the method unless explicitly defined otherwise. Features explained with reference to the system can be applied mutatis mutandis to the method to achieve the similar advantages, and vice versa.

One or more objects of the invention can be achieved with a method for generating electricity, wherein the method comprises a step of using a rotor according to any of the embodiments described herein.

One or more objects of the invention can be achieved with a method for generating electricity, wherein the method comprises a step of converting wind into rotation of a rotor according to any of the embodiments described herein, and a step of making a generator rotate by the rotation of the central shaft of the rotor.

The invention further relates to method for manufacturing a rotor or wind turbine according to any of the embodiments described herein, wherein the method comprises a step of 3D-printing one or more of: the central shaft, the main blades, the secondary blades.

Exemplary embodiments of the invention are described using the figures. It is to be understood that these figures merely serve as example of how the invention can be implemented and are in no way intended to be construed as limiting for the scope of the invention and the claims. Like features are indicated by like reference numerals along the figures. In the figures:
Fig 1: schematically illustrates a rotor;
Fig. 2: schematically illustrates a rotor from a side view;
Fig. 3: schematically illustrates the section B-B indicated in fig. 2;
Fig. 4: schematically illustrates several details of the design of the rotor;
Fig. 5: schematically illustrates a wind turbine comprising the rotor.

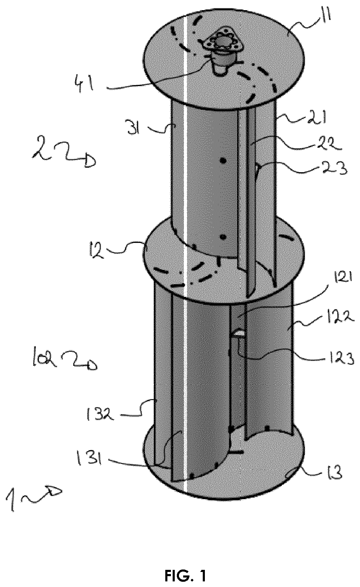

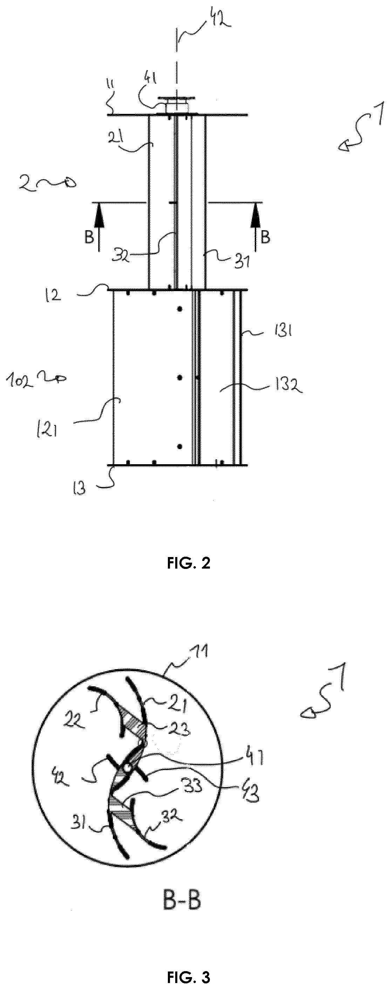

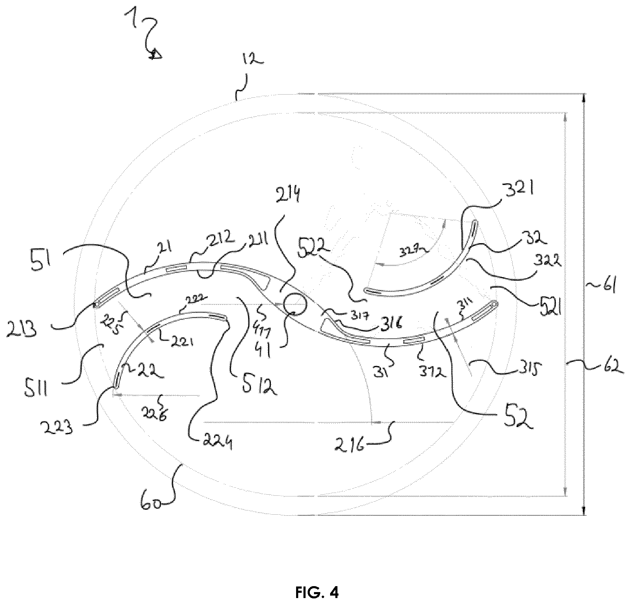

Fig. 1 - fig. 4 schematically illustrates a rotor 1 for a wind turbine in a possible embodiment according to the invention. Fig 1 schematically illustrates the rotor 1; Fig. 2 schematically illustrates the rotor 1 from a side view; Fig. 3 schematically illustrates the section B-B indicated in fig. 2; Fig. 4: schematically illustrates several details of the design of the rotor 1.

The rotor 1 comprises a first rotor section 2 and a second rotor section 102. The second rotor section 102 is embodied the same as the first rotor section 2, with the difference that everything is offset in circumferential direction by 90 degrees. The features of the second rotor section 102 will therefore not be elaborated on in much detail. Features of the second rotor section 102 are indicated with the same reference numeral as corresponding features of the first rotor section 2, wherein an "even 100" is added to the reference numeral.

The rotor 1 comprises a central shaft 41. The central shaft 41 extends throughout the first 2 and second rotor section 102. A center axis 42 (fig. 2) of the central shaft 41 is a rotation axis 42 of the rotor 1. When being impacted by wind, the rotor 1 will rotate around the rotation axis 42. The rotation axis 42 may e.g. extend in vertical direction, and the wind may e.g. have a main component in horizontal direction. The rotation of the central shaft 41 will cause a generator (not shown) to rotate, which will generate electricity. The center axis 42 of the central shaft 41 is also the longitudinal center axis 42 of the rotor 1. When a longitudinal direction is referenced herein, this is a direction parallel to the center axis 42.

In the first rotor section 2, a plurality of main blades 21, 31 extend radially outward from the central shaft 41. In this example, the plurality of main blades 21, 31 consists of two main blades, being a first main blade 21 and a second main blade 31. The plurality of main blades 21, 31 arranged equidistantly when seen in circumferential direction. Thus, the first 21 and second main blade 31 are spaced 180 degrees of each other. In the second rotor section 102, a plurality of second section main blades 121, 131 extend radially outward from the central shaft 41 in similar arrangement. The main blades 21, 31, 121, 131, have a curved shape when seen in radial direction.

The rotor 1 further comprises a first section upper disk 11, a middle disk 12, and a second section lower disk 13. In the shown example, the middle disk 12 also functions as first section lower disk 12 and as a second section upper disk 12. The main blades 21, 31 of the first rotor section 1 are connected at an upper end to the first section upper disk 11, and at a lower end to the middle disk 12. The main blades 121, 131 are in similar ways connected to the middle disk 12 and second section lower disk 13.

In the first rotor section 2, the rotor 1 comprises a first secondary blade 22 and a second secondary blade 32. The first secondary blade 22 is associated with the first main blade 21 and the second secondary blade 32 is associated with the second main blade 31. As can be seen, each secondary blade 22, 32 is arranged in the vicinity of the main blade 21, 31 with which it is associated.

The arrangement of the main blades 21, 31 and secondary blades 22, 32 is shown in more detail in fig. 4. The rotation axis extends perpendicular to the paper in the view of fig. 4, coinciding with the center axis of the central shaft 41. It can be seen that the main blades 21, 31 extend radially outward from the central shaft 41. As illustrated for the first main blade 21, a radial inner end 214 is directly connected to the central shaft 41. The main blade 21 is curved in radial direction. The curved shape defines a main blade inner wall 211 on the inside of the curved shape and a main blade outer wall 212 on the outside of the curved shape.

The secondary blades 22, 32 are not directly connected to the central shaft 41. As illustrated for the first secondary blade 22, a radial inner end 224 of the first secondary blade 22 is spaced from the central shaft 41. This allows for an inner flow path end 512 for a wind flow path 51 as explained in more detail below. The secondary blades 22, 32 are also curved when seen in radial direction of the rotor 1. The curved shape defines a secondary blade inner wall 221 on the inside of the curved shape and a secondary blade outer wall 222 on the outside of the curved shape.

When e.g. wind impacts the rotor 1 in a direction going from the bottom of the page to the top, for the rotor 1 in the situation as shown, the first main blade 21 and first secondary blade 22 are concave. The second main blade 31 and the second secondary blade 32 are convex. The force exerted by the wind on the first main and secondary blade 21, 22 is therefore larger than the force exerted on the second main and secondary blade 31, 32. This will cause a torque that makes the central shaft 41 (and the rest of the rotor 1) rotate in clockwise direction. This rotation can be used to make a generator rotate, to generate electricity.

The secondary blades 22, 32 and their associated main blade 21, 32 are arranged such that the secondary blade outer wall 222, 322 is facing the main blade inner wall 211, 311 of the respective associated main blade 21, 31. The secondary blade outer wall 222, 322 is spaced the main blade inner wall 211, 311 of the respective associated main blade 21, 31 in circumferential direction. This defines a wind flow path 51, 52 between each secondary blade outer wall 222, 322 and the respective main blade inner wall 211, 311. In particular, fig. 4 shows a first wind flow path 51 with a first outer flow path end 511 and a first inner flow path end 512; and a second wind flow path 52 with a second outer flow path end 521 and a second inner flow path end 522.

However, it is envisaged that it in alternative embodiments is also possible that the secondary blade 22, 32 is arranged with its secondary blade inner wall 221, 321 facing the main blade outer wall 212, 312 of the associated main blade 21, 31. In some embodiments, it may also be possible to have two secondary blades associated with a single main blade, e.g. arranged on both sides of the main blade.

In the shown embodiment, ss illustrated for the first wind flow path 51, the outer flow path end 511 is defined between a radial outer end 223 of the secondary blade 22 and a radial outer end 213 of the associated main blade 21. The inner flow path end 512 is defined between a radial inner end 224 of the secondary blade 22 and the main blade inner wall 211 of the associate main blade 21. The secondary blades 22, 32 and the wind flow paths 51, 52 improve the wind forces exerted onto the rotor 1, and thus aids the rotation. This improves the efficiency of the rotor 1.

In fig. 4 a main radius of curvature 216 is indicated, which is the radius of curvature of the first main blade 21, in particular of the main blade outer wall 212. Also a secondary radius of curvature 226 is indicated, which is the radius of curvature of the first secondary blade 22, in particular of the secondary blade outer wall 222. It can be seen that the main radius of curvature 216 is different from the secondary radius of curvature 226. In particular, the main radius of curvature 216 is larger than the secondary radius of curvature 226. The main radius of curvature 216 can e.g. be 1.5-2.5 times larger than the secondary radius of curvature 226. For example, the main radius of curvature 216 can be 100-130 mm, and the secondary radius of curvature can be 50-70 mm.

The secondary radius of curvature 226 is constant over the entire secondary blade 22, 32. In particular, both the secondary blade inner wall 221, 321 and the secondary blade outer wall 222, 322 have a constant radius of curvature. The secondary blade 22, 35 thus has the shape of a partial annulus when seen from the view of fig. 4. The partial annulus shape in particular covers a partial annulus angle 327 which is schematically indicated for the second secondary blade 32. The partial annulus angle 327 represents how much of a complete annulus the secondary blade 32 covers. The partial annulus angle 327 can e.g. be 95-120 degrees.

Fig. 4 also illustrates a secondary blade thickness 225 indicated for the first secondary blade 22. The secondary blade thickness 225 is constant for the secondary blade 22, 32. The secondary blade thickness can e.g. be 3-6 mm.

Fig. 4 also illustrates a main blade thickness 315 indicated for the second main blade 31. The main blade thickness 31 is larger than the secondary blade thickness 225, e.g. 1.4-1.7 times larger. The main blade thickness can e.g. be 5-10 mm. The secondary blade thickness 315 is constant for the majority of the main blades 21, 31, in particular the further radially outward parts. However, at the radial inner section 317 the main blade 31 is thicker. In particular, the main blade inner wall 311 has radial inner part 316 with an adjusted curvature. The curvature of said radial inner part 316 of the second main blade 31 is the curvature of the main blade outer wall 212 of the first main blade 21. This has an advantageous effect on the wind flow to improve the efficiency. In addition, this further allows a central shaft diameter 411 of the central shaft 41 to be larger than the main blade thickness 315. The central shaft diameter 411 can e.g. be 10-20 mm.

Fig. 4 illustrates a virtual outer end circle 60 having a center point on the rotation axis (or longitudinal center axis of the rotor 1). The radial outer ends 213 of the main blade 21 and the radial outer ends 223 of the secondary blade 22 are arranged on the virtual outer end circle 60. Although not explicitly indicated with reference numerals in fig. 4, it can be seen that this is the case for both the first main and secondary blade 21, 22 as for the second main and secondary blade 31, 32. Having the radial outer ends 213, 223 arranged on the same virtual outer end circle 60 is advantageous for the wind flow at the outer flow path end 511, 521 of the wind flow path 51, 52, thereby increasing efficiency.

The virtual outer end circle 60 as a virtual diameter 62. Fig. 4 also shows a diameter 61 of the middle disk 12. The diameter of the first section upper disk and the diameter of the second section lower disk are equal to the diameter 61. The virtual diameter 62 is smaller than the diameter 61. Thus implies that the main blades 21, 31 and secondary blades 22, 32 are never extending further radially outward than the disk 12. This is advantageous to protect the blades 21, 22, 31, 32 from damage.

Referring back to fig. 1 and fig. 3, it can be seen that the rotor 1 comprises two auxiliary connectors 23, 33. A first auxiliary connector 23 structurally connects the first secondary blade 22 to the first main blade 21. A second auxiliary connector 33 structurally connects the second secondary blade 32 to the second main blade 31. The auxiliary connectors are arranged in the middle of the first rotor section 2 when seen in longitudinal direction. In addition, the secondary blades 22, 32 are connected at an upper end to the first section upper disk 11, and at a lower end to the middle disk 12.

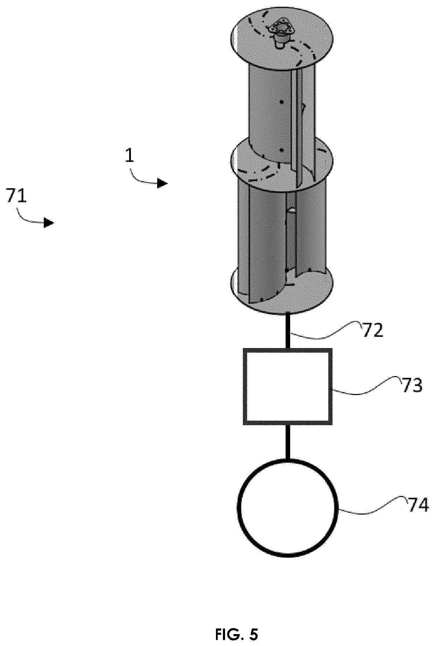

The rotor 1 as shown in the figures can be part of a wind turbine 71, as schematically illustrated in fig. 5. The central shaft of the rotor is connected to an output shaft 72. Rotation of the central shaft will cause the output shaft 71 to rotate. The output shaft 72 in turn rotates a gearbox 73. The gearbox 73 then causes rotation of a generator 74 at an increased rpm. This generates electricity. The electricity can e.g. be supplied to a user point, an electricity grid, or a battery. Optionally, the frequency and/or voltage of the electricity is first converted.

The rotor 1 or wind turbine 71 as illustrated can e.g. be installed in sailing boat, e.g. on a mast. It is also possible to arrange one or more wind turbines 71 on a building, e.g. on the roof.

As required, detailed embodiments of the present invention are described herein; however, it is to be understood that the disclosed embodiments are merely examples of the invention, which may be embodied in various ways. Therefore, specific structural and functional details disclosed herein are not to be construed as limiting, but merely as a basis for the claims and as a representative basis for teaching those skilled in the art to practice the present invention in various ways in virtually any suitable detailed structure. Not all of the objectives described need be achieved with particular embodiments.

Furthermore, the terms and expressions used herein are not intended to limit the invention, but to provide an understandable description of the invention. The words "a", "an", or "one" used herein mean one or more than one, unless otherwise indicated. The terms "a multiple of", "a plurality" or "several" mean two or more than two. The words "comprise", "include", "contain" and "have" have an open meaning and do not exclude the presence of additional elements. Reference numerals in the claims should not be construed as limiting the invention.

The mere fact that certain technical features are described in different dependent claims still allows the possibility that a combination of these technical measures can be used advantageously.

A single processor or other unit can perform the functions of various components mentioned in the description and claims, e.g. of processing units or control units, or the functionality of a single processing unit or control unit described herein can in practice be distributed over multiple components, optionally physically separated of each other. Any communication between components can be wired or wireless by known methods.

The actions performed by the control unit can be implemented as a program, for example computer program, software application, or the like. The program can be executed using computer readable instructions. The program may include a subroutine, a function, a procedure, an object method, an object implementation, an executable application, a source code, an object code, a shared library / dynamic load library and / or other set of instructions designed for execution on a computer system.

A computer program or computer-readable instructions can be stored and / or distributed on a suitable medium, such as an optical storage medium or a solid-state medium supplied with or as part of other hardware, but can also be distributed in other forms, such as via internet or other wired or wireless telecommunication systems.

## Claims

1. A rotor (1) for a wind turbine (71) such as a vertical-axis wind turbine, e.g. a Savonius type wind turbine, comprising:
• a central shaft (41) defining a rotation axis (42);
• a plurality of main blades (21, 31) structurally connected to the central shaft, wherein each blade extends in a direction radially outward from the central shaft with a curved shape comprising a main blade inner wall (211, 311) and a main blade outer wall (212, 312);
• a plurality of secondary blades (22, 32), wherein each secondary blade
• extends in radial direction of the rotor with a curved shape comprising:
• a secondary blade inner wall (221, 321), and
• a secondary blade outerwall (222, 322) opposite of the secondary blade inner wall;
• is associated with an associated main blade (21, 31) of the plurality of main blades, wherein the secondary blade is arranged facing the associated main blade, thereby defining a wind flow path (51, 52) between the secondary blade and the associated main blade, the wind flow path having:
• an outer flow path end (511, 521) between a radial outer end (223) of the secondary blade and a radial outer end (213) of the associated main blade;
• an inner flow path end (512, 522) between
a. a radial inner end (224) of the secondary blade and
b. the main blade inner wall or the main blade outer wall of the associate main blade
**characterized in that**
• the main blades are directly connected to the central shaft to accomplish the structural connection, wherein a radial inner end of the main blade is directly connected to the central shaft, and the secondary blades are spaced from the central shaft.
• the main blade comprises a radial inner section and a radial outer section, wherein the main blade inner wall has radial inner part with an adjusted curvature at the radial inner section, wherein the curvature of said radial inner part of a first main blade is the curvature of the main blade outer wall of another main blade.

2. The rotor according to claim 1, wherein the secondary blade is arranged with its secondary blade outer wall facing the main blade inner wall of the associated main blade, thereby defining the wind flow path (51, 52) between said secondary blade outer wall and main blade inner wall, wherein the inner flow path end of the wind flow path is arranged between the radial inner end (224) of the secondary blade and the main blade inner wall of the associate main blade.

3. The rotor according to claim 1 or claim 2, wherein the plurality of main blades consists of two main blades including a first main blade (21) and second main blade (31), and the plurality of secondary blades consists of two secondary blades including a first secondary blade (22) and second secondary blade 32),
wherein the first and second main blade are offset by 180 degrees of each other in circumferential direction.

4. The rotor according to any of the preceding claims, wherein
• the curved shape of each main blade comprises a main radius (216) of curvature:
• the curved shape of each secondary blade comprises a secondary radius of curvature (226), wherein the secondary radius of curvature is different, preferably smaller, from the main radius of curvature.

5. The rotor according to any of the preceding claims, wherein the main blades extend radially outward from the central shaft.

6. The rotor according to any of the preceding claims, wherein the main blades are arranged equidistantly when seen in circumferential direction.

7. The rotor according to any of the preceding claims, comprising an upper disk (11) attached to an upper end of each main blade and an upper end of each secondary blade; and a lower disk (12) attached to a lower end of each main blade and a lower end of each secondary blade.

8. The rotor according to any of the preceding claims, wherein
• each main blade comprises a main blade thickness (315);
• each secondary blade comprises a secondary blade thickness (225), wherein the secondary blade thickness is different, preferably smaller, from the main blade thickness.

9. The rotor according to any of the preceding claims, wherein radial outer ends of the secondary blades and radial outer ends of the main blades are arranged on a single virtual outer end circle (60).

10. The rotor according to any of the preceding claims, comprises at least a first rotor section (2) and a second rotor section (102), being offset from each other when seen in longitudinal direction of the central shaft, wherein the plurality of main blades and the plurality of secondary blades are arranged in the first rotor section, wherein the rotor comprises in the second rotor section:
• a plurality of second section main blades (121, 131) structurally connected to the central shaft, and
• a plurality of second section secondary blades (122, 132), each associated with an associated main blade of the plurality of second section main blades.

11. The rotor according to the preceding claim, wherein the main blades in the first rotor section are offset from the second section main blades when seen in circumferential direction, e.g. offset by 90 degrees.

12. A boat, e.g. a sailing boat, comprising at least one rotor according to any of the preceding claims.

13. A building, e.g. a house, an appartement building, an industrial building, an office building, comprising at least one rotor according to any of the claims 1-11, wherein the rotor is arranged on a roof of the building.

14. Method for generating electricity, wherein the method comprises a step of converting wind into rotation of a rotor according to any of the claims 1-11, and a step of making a generator rotate by the rotation of the central shaft of the rotor.

15. Method for manufacturing a rotor or wind turbine according to any of the claims 1-11, wherein the method comprises a step of 3D-printing one or more of: the central shaft, the main blades, the secondary blades.

## Patentansprüche

1. Rotor (1) für eine Windkraftanlage (71), wie zum Beispiel eine Windkraftanlage mit vertikaler Achse, beispielsweise eine Windkraftanlage vom Typ Savonius, umfassend:
• eine zentrale Welle (41), die eine Drehachse (42) definiert;
• eine Vielzahl von Hauptblättern (21, 31), die strukturell mit der zentralen Welle verbunden sind, wobei sich jedes Blatt in einer Richtung radial nach außen von der zentralen Welle mit einer gekrümmten Form erstreckt, die eine Hauptblattinnenwand (211, 311) und eine Hauptblattinnenwand (212, 312) umfasst;
• eine Vielzahl von Sekundärblättern (22, 32), wobei jedes Sekundärblatts
• sich in radialer Richtung des Rotors mit einer gekrümmten Form erstreckt, umfassend:
• eine Sekundärblattinnenwand (221, 321), und
• eine der Sekundärblattinnenwand gegenüberliegende Sekundärblattaußenwand (222, 322);
• einem zugehörigen Hauptblatt (21, 31) aus der Vielzahl von Hauptblättern zugeordnet ist, wobei das Sekundärblatt so angeordnet ist, dass es dem zugehörigen Hauptblatt zugewandt ist, wodurch ein Windströmungsweg (51, 52) zwischen dem Sekundärblatt und dem zugehörigen Hauptblatt definiert wird, wobei der Windströmungsweg Folgendes aufweist:
• ein äußeres Strömungswegende (511, 521) zwischen einem radialen äußeren Ende (223) des Sekundärblatts und einem radialen äußeren Ende (213) des zugehörigen Hauptblatts;
• ein inneres Strömungswegende (512, 522) zwischen
a. einem radialen inneren Ende (224) des Sekundärblatts und
b. zwischen der Sekundärblattinnenwand oder der Sekundärblattaußenwand des zugehörigen Sekundärblatts
**dadurch gekennzeichnet, dass**
• das Hauptblatt direkt mit der zentralen Welle verbunden ist, um die strukturelle Verbindung herzustellen, wobei ein radiales inneres Ende des Hauptblatts direkt mit der zentralen Welle verbunden ist und das Sekundärblatt von der zentralen Welle beabstandet ist,
• das Hauptblatt einen radialen Innenabschnitt und einen radialen Außenabschnitt umfasst, wobei die Hauptblatteinnenwand einen radialen Innenteil mit einer angepassten Krümmung am radialen Innenabschnitt aufweist, wobei die Krümmung des radialen Innenteils eines ersten Hauptblatts die Krümmung der Außenwand eines anderen Hauptblatts ist.

2. Rotor nach Anspruch 1, wobei das Sekundärblatt so angeordnet ist, dass seine Sekundärblattaußenwand der Hauptblatteinnenwand des zugehörigen Hauptblatts zugewandt ist, wodurch der Windströmungsweg (51, 52) zwischen der Sekundärblattaußenwand und der Hauptblatteinnenwand definiert wird, wobei das innere Strömungswegende des Windströmungswegs zwischen dem radialen inneren Ende (224) des Sekundärblatts und der Hauptblatteinnenwand des zugehörigen Hauptblatts angeordnet ist.

3. Rotor nach Anspruch 1 oder Anspruch 2, wobei die Anzahl der Hauptblätter eine Anzahl von zwei Hauptblättern einschließt, darunter ein erstes Hauptblatt (21) und ein zweites Hauptblatt (31), und die Anzahl der Sekundärblätter eine Anzahl von zwei Sekundärblättern einschließt, darunter ein erstes Sekundärblatt (22) und ein zweites Sekundärblatt (32), wobei das erste und das zweite Hauptblatt in Umfangsrichtung um 180 Grad zueinander versetzt sind.

4. Rotor nach einem der vorstehenden Ansprüche, wobei
• die gekrümmte Form jedes Hauptblatts einen Hauptradius (216) der Krümmung umfasst;
• die gekrümmte Form jedes Sekundärblatts einen Sekundärradius der Krümmung (226) umfasst, wobei der Sekundärradius der Krümmung sich vom Hauptradius der Krümmung unterscheidet, vorzugsweise kleiner ist.

5. Rotor nach einem der vorstehenden Ansprüche, wobei sich die Hauptblätter radial von der zentralen Welle nach außen erstrecken.

6. Rotor nach einem der vorstehenden Ansprüche, wobei die Hauptblätter in Umfangsrichtung gesehen in gleichen Abständen angeordnet sind.

7. Rotor nach einem der vorstehenden Ansprüche, umfassend eine obere Scheibe (11), die an einem oberen Ende jedes Hauptblatts und einem oberen Ende jedes Sekundärblatts befestigt ist, und eine untere Scheibe (12), die an einem unteren Ende jedes Hauptblatts und einem unteren Ende jedes Sekundärblatts befestigt ist.

8. Rotor nach einem der vorstehenden Ansprüche, wobei
• jedes Hauptblatt eine Hauptblattdicke (315) umfasst;
• jedes Sekundärblatt eine Sekundärblattdicke (225) umfasst, wobei sich die Sekundärblattdicke von der Hauptblattdicke unterscheidet, vorzugsweise kleiner ist.

9. Rotor nach einem der vorstehenden Ansprüche, wobei die radialen äußeren Enden des Sekundärblatts und die radialen äußeren Enden des Hauptblatts auf einem einzigen virtuellen äußeren Endkreis (60) angeordnet sind.

10. Rotor nach einem der vorstehenden Ansprüche, der mindestens einen ersten Rotorabschnitt (2) und einen zweiten Rotorabschnitt (102) umfasst, die in Längsrichtung der zentralen Welle versetzt zueinander angeordnet sind, wobei die Vielzahl der Hauptblätter und die Vielzahl der Sekundärblätter im ersten Rotorabschnitt angeordnet sind, wobei der Rotor im zweiten Rotorabschnitt Folgendes umfasst:
• eine Vielzahl von Hauptblättern des zweiten Abschnitts (121, 131), die strukturell mit der zentralen Welle verbunden sind, und
• eine Vielzahl von Sekundärblättern des zweiten Abschnitts (122, 132), die jeweils einem zugehörigen Hauptblatt der Vielzahl von Hauptblöttern des zweiten Abschnitts zugeordnet sind.

11. Rotor nach dem vorstehenden Anspruch, wobei das Hauptblatt im ersten Rotorabschnitt in Umfangsrichtung versetzt zu dem Hauptblatt im zweiten Abschnitt angeordnet ist, beispielsweise um 90 Grad versetzt.

12. Boot, beispielsweise ein Segelboot, das mindestens einen Rotor nach einem der vorstehenden Ansprüche umfasst.

13. Gebäude, beispielsweise ein Haus, ein Mehrfamilienhaus, ein Industriegebäude oder ein Bürogebäude, umfassend mindestens einen Rotor nach einem der Ansprüche 1-11, wobei der Rotor auf einem Dach des Gebäudes angeordnet ist.

14. Verfahren zur Erzeugung von Strom, wobei das Verfahren einen Schritt zum Umwandeln von Wind in eine Drehung eines Rotors nach einem der Ansprüche 1-11 und einen Schritt zum Drehen eines Generators durch die Drehung der zentralen Welle des Rotors umfasst.

15. Verfahren zur Herstellung eines Rotors oder einer Windkraftanlage nach einem der Ansprüch 1-11, wobei das Verfahren einen Schritt des 3D-Drucks eines oder mehrerer der folgenden Elemente umfasst: die zentrale Welle, die Hauptblätter, die Sekundärblätter.

## Revendications

1. Rotor (1) pour une éolienne (71) telle qu'une éolienne à axe vertical, par exemple une éolienne de type Savonius, comprenant :
• un arbre central (41) définissant un axe de rotation (42) ;
• une pluralité de pales principales (21, 31) reliées structurellement à l'arbre central, dans lequel chaque pale s'étend dans une direction radialement vers l'extérieur depuis l'arbre central avec une forme incurvée comprenant une paroi intérieure de pale principale (211, 311) et une paroi extérieure de pale principale (212, 312) ;
• une pluralité de pales secondaires (22, 32), dans lequel chaque pale secondaire
• s'étend dans la direction radiale du rotor avec une forme incurvée comprenant :
• une paroi intérieure de pale secondaire (221, 321), et
• une paroi extérieure de pale secondaire (222, 322) opposée à la paroi intérieure de pale secondaire ;
• est associée à une pale principale (21, 31) associée de la pluralité de pales principales, dans lequel la pale secondaire est agencée en regard de la pale principale associée, définissant ainsi un chemin d'écoulement du vent (51, 52) entre la pale secondaire et la pale principale associée, le chemin d'écoulement du vent ayant :
• une extrémité de chemin d'écoulement externe (511, 521) entre une extrémité externe radiale (223) de la pale secondaire et une extrémité externe radiale (213) de la pale principale associée ;
• une extrémité de trajet d'écoulement intérieur (512, 522) entre
a. une extrémité intérieure radiale (224) de la pale secondaire et
b. la paroi intérieure de pale principale ou la paroi extérieure de pale principale de la pale principale associée
**caractérisée en ce que**
• les pales principales sont directement reliées à l'arbre central pour accomplir la liaison structurelle, dans lequel une extrémité intérieure radiale de la pale principale est directement reliée à l'arbre central, et les pales secondaires sont espacées de l'arbre central,
• la pale principale comprend une section intérieure radiale et une section extérieure radiale, dans lequel la paroi intérieure de pale principale présente une partie intérieure radiale avec une courbure ajustée au niveau de la section intérieure radiale, dans lequel la courbure de ladite partie intérieure radiale d'une première pale principale est la courbure de la paroi extérieure de pale principale d'une autre pale principale.

2. Rotor selon la revendication 1, dans lequel la pale secondaire est agencée avec sa paroi extérieure de pale secondaire faisant face à la paroi intérieure de pale principale de la pale principale associée, définissant ainsi le chemin d'écoulement du vent (51, 52) entre ladite paroi extérieure de pale secondaire et ladite paroi intérieure de pale principale, dans lequel l'extrémité de chemin d'écoulement interne du chemin d'écoulement du vent est agencée entre l'extrémité intérieure radiale (224) de la pale secondaire et la paroi intérieure de pale principale de la pale principale associée.

3. Rotor selon la revendication 1 ou la revendication 2, dans lequel la pluralité de pales principales consiste en deux pales principales incluant une première pale principale (21) et une deuxième pale principale (31), et la pluralité de pales secondaires consiste en deux pales secondaires incluant une première pale secondaire (22) et une deuxième pale secondaire (32),
dans lequel la première et la deuxième pale principale sont décalées de 180 degrés l'une par rapport à l'autre dans la direction circonférentielle.

4. Rotor selon l'une quelconque des revendications précédentes, dans lequel
• la forme incurvée de chaque pale principale comprend un rayon de courbure principal (216) ;
• la forme incurvée de chaque pale secondaire comprend un rayon de courbure secondaire (226), dans lequel le rayon de courbure secondaire est différent du rayon de courbure principal, de préférence plus petit.

5. Rotor selon l'une quelconque des revendications précédentes, dans lequel les pales principales s'étendent radialement vers l'extérieur à partir de l'arbre central.

6. Rotor selon l'une quelconque des revendications précédentes, dans lequel les pales principales sont agencées à équidistance lorsqu'elles sont vues dans la direction circonférentielle.

7. Rotor selon l'une quelconque des revendications précédentes, comprenant un disque supérieur (11) fixé à une extrémité supérieure de chaque pale principale et une extrémité supérieure de chaque pale secondaire ; et un disque inférieur (12) fixé à une extrémité inférieure de chaque pale principale et une extrémité inférieure de chaque pale secondaire.

8. Rotor selon l'une quelconque des revendications précédentes, dans lequel
• chaque pale principale comprend une épaisseur de pale principale (315) ;
• chaque pale secondaire comprend une épaisseur de pale secondaire (225), dans lequel l'épaisseur de pale secondaire est différente de l'épaisseur de pale principale, de préférence plus petite.

9. Rotor selon l'une quelconque des revendications précédentes, dans lequel des extrémités extérieures radiales des pales secondaires et des extrémités extérieures radiales des pales principales sont agencées sur un seul cercle virtuel d'extrémité extérieure (60).

10. Rotor selon l'une quelconque des revendications précédentes, comprenant au moins une première section de rotor (2) et une deuxième section de rotor (102), étant décalées l'une par rapport à l'autre lorsqu'elles sont vues dans la direction longitudinale de l'arbre central, dans lequel la pluralité de pales principales et la pluralité de pales secondaires sont agencées dans la première section de rotor, dans lequel le rotor comprend dans la deuxième section de rotor :
• une pluralité de pales principales de deuxième section (121, 131) reliées structurellement à l'arbre central, et
• une pluralité de pales secondaires de deuxième section (122, 132), chacune associée à une pale principale associée de la pluralité de pales principales de deuxième section.

11. Rotor selon la revendication précédente, dans lequel les pales principales dans la première section de rotor sont décalées par rapport aux pales principales de deuxième section lorsqu'elles sont vues dans la direction circonférentielle, par exemple décalées de 90 degrés.

12. Bateau, par exemple voilier, comprenant au moins un rotor selon l'une quelconque des revendications précédentes.

13. Bâtiment, par exemple maison, bâtiment d'appartements, bâtiment industriel, bâtiment de bureaux, comprenant au moins un rotor selon l'une quelconque des revendications 1 à 11, dans lequel le rotor est agencé sur un toit du bâtiment.

14. Procédé de production d'électricité, dans lequel le procédé comprend une étape de conversion du vent en rotation d'un rotor selon l'une quelconque des revendications 1 à 11, et une étape de mise en rotation d'un générateur par la rotation de l'arbre central du rotor.

15. Procédé de fabrication d'un rotor ou d'une éolienne selon l'une quelconque des revendications 1 à 11, dans lequel le procédé comprend une étape d'impression 3D d'un ou plusieurs parmi : l'arbre central, les pales principales, les pales secondaires.
